# EUROPEAN PATENT APPLICATION

(11) **EP 4 369 042 A1**
(43) Date of publication of application: **15.05.2024**
(21) Application number: 23191767.5
(22) Date of filing: 16.08.2023
(51) Int. Cl.: G01S 17/42, G01S 17/86, G01S 17/87, G01S 17/89, G01S 17/931, G01S 7/48

(54) **SYSTEMS AND TECHNIQUES FOR PROCESSING LIDAR DATA**

(30) Priority: 10.11.2022 US 202217984655
(71) Applicant: GM Cruise Holdings LLC, San Francisco, CA 94107 (US)
(72) Inventor: GANGUNDI, Sandeep, San Francisco, CALIFORNIA, 94107 (US); LEKKERKERKER, Cornelis Jacob, San Francisco, CALIFORNIA, 94107 (US); BUDHIRAJA, Pulkit, San Francisco, CALIFORNIA, 94107 (US); OLIVEIRA, Victor, San Francisco, CALIFORNIA, 94107 (US); WITTE, Zachary, San Francisco, CALIFORNIA, 94107 (US)
(74) Representative: Mozzi, Matteo

(57) **Abstract**

Systems and techniques are provided for processing data from an optical sensor. An example method includes obtaining, from an optical sensor configured to rotate about an axis, sensor data; generating, based on the sensor data, slices of sensor data, each slice having a field-of-coverage (FOC) that is less than 360 degrees, wherein a slice size is determined based on a rate for publishing a combination of slices that yields 360 degrees of coverage within a threshold period, a number and size of slices estimated to yield a combined FOC of 360 degrees while achieving a desired reduction in a resources contention by consumer nodes, and/or a field-of-view (FOV) of a camera device; and providing, to the consumer nodes, a partial optical sensor scan comprising the slices of sensor data, the partial optical sensor scan being provided prior to obtaining a revolution of sensor data having a 360 degrees of coverage.

## Description

### TECHNICAL FIELD

The present disclosure generally relates to processing data from light detection and ranging (LIDAR) sensors. For example, aspects of the present disclosure relate to techniques and systems for pre-processing data from LIDAR sensors for perception using partial LIDAR scans for improved sensor fusion and stack latency.

### BACKGROUND

Sensors are commonly integrated into a wide array of systems and electronic devices such as, for example, camera systems, mobile phones, autonomous systems (e.g., autonomous vehicles, unmanned aerial vehicles or drones, autonomous robots, etc.), computers, smart wearables, and many other devices. The sensors allow users to obtain sensor data that measures, describes, and/or depicts one or more aspects of a target such as an object, a scene, a person, and/or any other targets. For example, an image sensor can be used to capture frames (e.g., video frames and/or still pictures/images) depicting a target(s) from any electronic device equipped with an image sensor. As another example, a light ranging and detection (LIDAR) sensor can be used to determine ranges (variable distance) of one or more targets by directing a laser to a surface of an entity (e.g., a person, an object, a structure, an animal, etc.) and measuring the time for light reflected from the surface to return to the LIDAR. In some cases, a LIDAR can be configured to rotate about an axis of the LIDAR in order to collect LIDAR data for a full rotation (e.g., 360 degrees) of the LIDAR. Typically, the LIDAR data is processed after the LIDAR has completed a full revolution (e.g., 360 degrees) and obtained a full revolution of LIDAR data. The full revolution of LIDAR data can allow the LIDAR to achieve a larger field-of-view (FOV). However, the rotation of the LIDAR to obtain full revolutions of LIDAR data can introduce latencies in the LIDAR pipeline which is at least partly based on the amount of time it takes for the LIDAR to complete a full revolution.

### BRIEF DESCRIPTION OF THE DRAWINGS

Illustrative examples and aspects of the present application are described in detail below with reference to the following figures:
FIG. 1 is a diagram illustrating an example system environment that can be used to facilitate autonomous vehicle (AV) navigation and routing operations, in accordance with some examples of the present disclosure;
FIG. 2 is a diagram illustrating an example split plane formed when a start and end of sensor data join after a full revolution of one or more sensors, in accordance with some examples of the present disclosure;
FIG. 3 is a diagram illustrating an example fusion 300 of LIDAR and camera data resulting in temporal artifacts, in accordance with some examples of the present disclosure;
FIG. 4 is a diagram illustrating an example of a light detection and ranging data processing pipeline, in accordance with some examples of the present disclosure.
FIG. 5 is a flowchart illustrating an example process for pre-processing data from light detection and ranging sensors for perception using partial sensor scans for improved sensor fusion and stack latency, in accordance with some examples of the present disclosure; and
FIG. 6 is a diagram illustrating an example system architecture for implementing certain aspects described herein.

### DETAILED DESCRIPTION

Certain aspects and examples of this disclosure are provided below. Some of these aspects and examples may be applied independently and some of them may be applied in combination as would be apparent to those of skill in the art. In the following description, for the purposes of explanation, specific details are set forth in order to provide a thorough understanding of the subject matter of the application. However, it will be apparent that various aspects and examples of the disclosure may be practiced without these specific details. The figures and description are not intended to be restrictive.

The ensuing description provides examples and aspects of the disclosure, and is not intended to limit the scope, applicability, or configuration of the disclosure. Rather, the ensuing description of the examples and aspects of the disclosure will provide those skilled in the art with an enabling description for implementing an example implementation of the disclosure. It should be understood that various changes may be made in the function and arrangement of elements without departing from the scope of the application as set forth in the appended claims.

One aspect of the present technology is the gathering and use of data available from various sources to improve quality and experience. The present disclosure contemplates that in some instances, this gathered data may include personal information. The present disclosure contemplates that the entities involved with such personal information respect and value privacy policies and practices.

As previously explained, sensors are commonly integrated into a wide array of systems and electronic devices. The sensors allow users to obtain sensor data that measures, describes, and/or depicts one or more aspects of a target such as an object, a scene, a person, and/or any other targets. For example, an image sensor can be used to capture frames (e.g., video frames and/or still pictures/images) depicting a target(s) from any electronic device equipped with an image sensor. As another example, a light ranging and detection (LIDAR) sensor can be used to determine ranges (variable distance) of one or more targets by directing a laser to a surface of an entity (e.g., a person, an object, a structure, an animal, etc.) and measuring the time for light reflected from the surface to return to the LIDAR. In some cases, a LIDAR can be configured to rotate about an axis of the LIDAR in order to collect LIDAR data for a full rotation (e.g., 360 degrees) of the LIDAR. Typically, the LIDAR data is processed after the LIDAR has completed a full revolution (e.g., 360 degrees) and obtained a full revolution of LIDAR data. The full revolution of LIDAR data can allow the LIDAR to achieve a larger field-of-view (FOV). However, the rotation of the LIDAR to obtain full revolutions of LIDAR data can introduce latencies in the LIDAR pipeline which is at least partly based on the amount of time it takes for the LIDAR to complete a full revolution.

Indeed, the latency of the LIDAR data processing pipeline in many systems implementing LIDARs is generally high and, in some cases, is reaching (or has reached) latency budget limits of the system. Accordingly, there is a need to optimize the LIDAR data processing pipeline in systems that implement LIDARs and particularly in systems with a lower amount of compute resources.

Moreover, the typical design of the LIDAR preprocessing pipeline is set up to work with a full revolution of data. For example, the LIDAR first performs a full rotation (e.g., a 360 degrees rotation) while collecting LIDAR data in order to obtain a full revolution of LIDAR data. Once the LIDAR has collected a full revolution of LIDAR data, the LIDAR sends the data to the LIDAR preprocessing pipeline for processing. The next processing cycle by the LIDAR preprocessing pipeline would subsequently be initiated once the LIDAR has performed a full rotation and collected a full revolution of LIDAR data.

In some cases, the LIDAR sensor of a LIDAR system may publish portions of LIDAR data until it has published a full revolution of LIDAR data. For example, the LIDAR sensor may publish LIDAR data covering a certain degree of coverage within a full revolution of coverage. To illustrate, as the LIDAR sensor rotates to collect LIDAR data, the LIDAR sensor can publish LIDAR data for every n degrees of coverage, such as every 5, 10, or 15 degrees of coverage, for example. In some examples, the LIDAR sensor can publish each portion of LIDAR data within packets containing the LIDAR data. A driver associated with the LIDAR can collect the packets of LIDAR data and publish them for processing after obtaining a full revolution of LIDAR data. Once the LIDAR preprocessing pipeline receives a full revolution of LIDAR data, the LIDAR preprocessing pipeline can begin processing the LIDAR data for a full revolution (e.g., a full LIDAR scan). However, waiting for a full revolution of LIDAR data to begin preprocessing the LIDAR data within the LIDAR preprocessing pipeline can lead to peaks in compute needs, suboptimal processing latency of camera/lidar fusion in setups that collect and process both LIDAR and camera data, and visual artifacts.

For example, waiting for a full revolution of LIDAR data to begin preprocessing the LIDAR data within the LIDAR preprocessing pipeline can lead to the LIDAR preprocessing pipeline processing a full 360 degrees of LIDAR data from every LIDAR in the system at (or around) the same time which can result in peaks in compute needs at (or around) the same time. Such peaks can lead to resource contention and ultimately increased latencies. Moreover, in such scenarios, after processing the LIDAR data within the LIDAR preprocessing pipeline, the LIDAR data becomes available roughly around the same time, which can lead the resource contention to continue downstream as well (e.g., each consumer of the LIDAR data can contend for resources to use the LIDAR data around the same time).

As noted above, waiting for a full revolution of LIDAR data to begin preprocessing the LIDAR data within the LIDAR preprocessing pipeline can also lead to suboptimal processing latencies of camera/LIDAR fusion operations in scenarios that involve fusion of camera and LIDAR data. For example, since LIDAR data is generally only published at the end or after a full LIDAR scan (e.g., a full LIDAR revolution), even when LIDAR data for a camera's field-of-view (FOV) is already captured, the system cannot use the LIDAR data or fuse the LIDAR data with camera data until the LIDAR data is preprocessed by the LIDAR preprocessing pipeline or a component or node of the LIDAR preprocessing pipeline sextant, which only happens when a full LIDAR scan (e.g., a full LIDAR revolution) is complete. This leads to wait times for nodes that rely on the LIDAR data to perform a fusion of the LIDAR data and camera data from one or more cameras. And once the processed LIDAR data is published to a node that uses and/or further processes the LIDAR data, every node waiting for the LIDAR data to fuse the LIDAR data with camera data is triggered at the same time (or substantially the same time), which exacerbates the resource contention and latencies associated with the LIDAR data.

Furthermore, waiting for a full revolution of LIDAR data to begin preprocessing the LIDAR data within the LIDAR preprocessing pipeline can lead visual artifacts. For example, a LIDAR system can capture a full revolution of LIDAR data (e.g., a full LIDAR scan) every n interval of time, where n is a positive number greater than zero. Thus, the data collected at the start of the LIDAR scan is n amount of time older than the data collected at the end of the LIDAR scan, where the *n* amount of time is based on the *n* interval of time associated with each full revolution of LIDAR data. For example, if it takes the LIDAR system 100 milliseconds (ms) to capture a full revolution of LIDAR data, then the LIDAR data collected at the start of the LIDAR scan is 100ms older than the LIDAR data collected at the end of the LIDAR scan. When a full revolution of LIDAR data is wrapped around to create a 360° representation, a split plane can form where the start and the end of the LIDAR data join as the LIDAR data on one side of the split plane is 100ms older than the LIDAR data on the other side of the split plane.

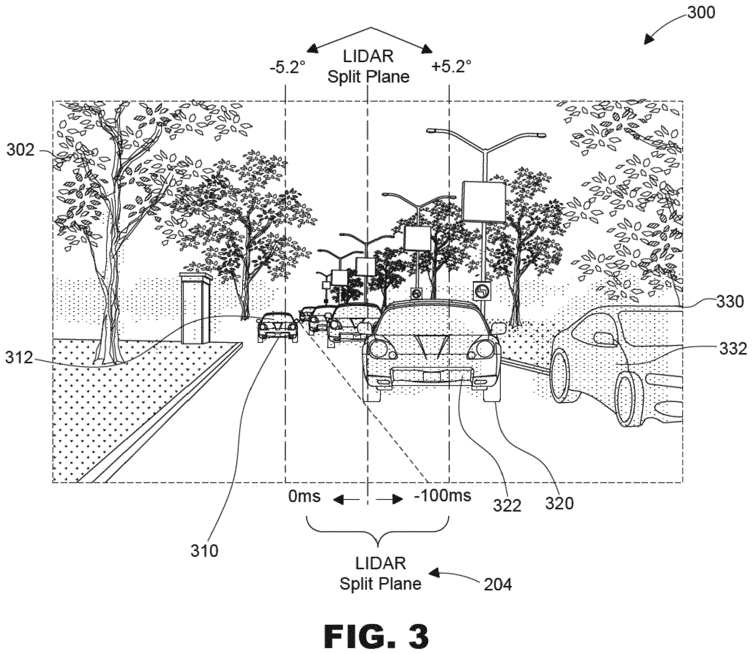

Moreover, since the LIDAR data is 100ms older on one side of the split plane than the other side of the split plane, if a camera FOV covers data across the LIDAR split plane, any projection of LIDAR data with camera data (e.g., any projection of fused LIDAR and camera data) may show temporal artifacts on moving objects on one side of the split plane (e.g., on the side of the split plane associated with the older LIDAR data). For example, if the split plane of a LIDAR situated on a roof of a vehicle is within the FOV of a camera on the vehicle, when the system projects LIDAR points onto an image captured by the camera, the projected LIDAR points on the image may show temporal visual artifacts, as further explained below with respect to FIG. 3.

In some cases, because the system may combine LIDAR data from the start of a LIDAR scan (e.g., the start of a LIDAR revolution) with LIDAR data from the end of the LIDAR scan, which is older than the LIDAR data captured at the start of the LIDAR scan, the system may need to row shift at least some of the LIDAR data so that each column in an organized cloud of LIDAR points contains LIDAR data with the same (or substantially the same) azimuth. However, the row shifting at the split plane can cause blurriness within the row shifting buffer for moving objects since it combines LIDAR data from the start of the LIDAR scan and end of the LIDAR scan.

In some aspects, systems, apparatuses, processes (also referred to as methods), and computer-readable media (collectively referred to as "systems and techniques") are described herein for pre-processing data from LIDAR sensors using partial LIDAR scans for improved sensor fusion and stack latency. The issues of resource contention and visual artifacts are both caused by the way the LIDAR data pipeline (e.g., the LIDAR data preprocessing pipeline) processes LIDAR data. The system and techniques described herein can process LIDAR data in streams or slices within a full revolution of LIDAR data, as opposed to processing a full revolution of LIDAR data all at once when a full LIDAR revolution is complete. Processing LIDAR data in streams or slices can lead to more even compute loads on the system during a LIDAR scan as opposed to a single peak load that occurs at the end of a LIDAR scan when waiting for a full revolution of LIDAR data to begin preprocessing the LIDAR data. This in turn can reduce latencies that occur due to resource contention.

Moreover, the systems and techniques described herein allows a node or component to publish preprocessed LIDAR data for smaller FOVs (e.g., LIDAR data associated with a surface within a FOV of a camera, instead of publishing (and waiting for) a full 360° revolution of LIDAR data. This can reduce or eliminate the idle wait time that nodes that use the LIDAR data may incur. For example, this can reduce or eliminate the idle wait time incurred by a node configured to fuse LIDAR data with camera data due to having to wait for the full 360° revolution of LIDAR data to be available. The availability of LIDAR data streams or slices can also improve, fix, and/or eliminate visual artifacts otherwise seen in LIDAR data at the split plane when waiting for the full revolution of LIDAR data to publish and/or process the LIDAR data.

In some examples, the systems and techniques described herein can process LIDAR data at a semi-continuous frequency (e.g., as opposed to a fixed frequency, such as 10 Hertz (Hz), typically implemented). Instead of waiting for a full revolution of LIDAR data (e.g., a full 360° of LIDAR data) to publish and/or process the LIDAR data, the systems and techniques described herein can process slices of a LIDAR scan (e.g., a full revolution of LIDAR data) as soon as the slices are captured by the LIDAR sensor. The driver of the LIDAR system can be configured to produce packets containing slices of the LIDAR data as opposed to creating packets containing all the data from a LIDAR scan (e.g., a full revolution of LIDAR data). The size of a slice of LIDAR data to be published and/or processed as described herein can be configurable. The systems and techniques described herein can configure the size of a slice to achieve a reasonably small slice of LIDAR data to gain streaming benefits (e.g., benefits of streaming slices of LIDAR data as opposed to full revolutions of LIDAR data) without leading to excessive (e.g., beyond a threshold amount) process wake-ups from publishing LIDAR data at a high rate (e.g., at a rate that exceeds a threshold).

In some examples, the size of a slice of LIDAR data can cover and/or correspond to a certain degree of coverage that is less than a full 360° revolution. For example, the systems and techniques described herein can publish slices at a rate of 600Hz (e.g., corresponding to a 6° slice), 300Hz (e.g., corresponding to a 12° slice), 150Hz (e.g., corresponding to a 24° slice), or any other rate corresponding to a slice having a size (e.g., in degrees) that is less than a full revolution. In some cases, a streaming LIDAR preprocessor can perform pointwise operations on one or more slices of LIDAR data, convert data from a sensor frame to a motion-corrected frame, perform row shifting on at least a portion of LIDAR data, and publish a slice of the processed LIDAR data.

A LIDAR accumulator can accumulate processed LIDAR data slices for a full revolution of LIDAR data. A buffer for row shifted data can be implemented to buffer a certain degree of LIDAR DATA (e.g., LIDAR data having a certain degree of coverage within a full revolution of an associated LIDAR. Moreover, the systems and techniques described herein can convert points from a motion corrected frame to an output frame, split the LIDAR data into primary and secondary LIDAR returns, and publish the LIDAR data for any downstream consumers. In some examples, the systems and techniques described herein can publish partial FOV point clouds. For example, the systems and techniques described herein can publish point clouds associated with less than a full 360° revolution. In some cases, the systems and techniques described herein can accumulate/aggregate LIDAR data for a full revolution (e.g., a full LIDAR scan) and provide a full revolution of LIDAR data to one or more consumer nodes.

In some cases, the systems and techniques described herein can optionally implement a partial LIDAR accumulator, in addition to the LIDAR accumulator described above. For example, the LIDAR accumulator can accumulate LIDAR data slices to create a full revolution of LIDAR data and publish the LIDAR corresponding to the full revolution. On the other hand, the partial LIDAR accumulator can publish point clouds of smaller FOVs. This can provide earlier availability of partial LIDAR data that can be used for downstream nodes, such as a camera-LIDAR fusion node configured to fuse LIDAR data with camera data, and reduce latencies associated with an availability of LIDAR data.

In some examples, an autonomous vehicle (AV) can implement several LIDARs to collect LIDAR data from a scene and use the LIDAR data to understand the scene. Moreover, the AV can implement a LIDAR preprocessing pipeline to preprocess LIDAR data collected by the LIDARs on the AV. The LIDAR preprocessing pipeline can run on an autonomous driving system computer (ADSC). In some cases, the LIDAR preprocessing pipeline or portions thereof can run on one or more nodes of the ADSC of the AV. To process the LIDAR data, the nodes of the ADSC can have high compute/processing requirements (e.g., compute/processing requirements that exceed a threshold), such as high graphics processing unit (GPU) and/or central processing unit (CPU) requirements, leading to high processor (e.g., GPU, CPU, etc.) utilization. In scenarios where the LIDAR preprocessing pipeline waits for a full revolution of LIDAR data to begin preprocessing the LIDAR data, the ADSC can experience significant resource contention caused by processing LIDAR data from the various LIDARs of the AV concurrently after every full lidar revolution (e.g., after every interval of time corresponding to a full LIDAR revolution).

On the other hand, processing LIDAR data at a semi-continuous frequency, as further described herein, can help spread the resource load more evenly and avoid resource demand spikes that occur in the LIDAR preprocessing pipeline when such pipeline is configured to wait for a full revolution of LIDAR data to begin preprocessing the LIDAR data. The processing of LIDAR data at a semi-continuous frequency can in turn lead to lower resource contention. In some cases, the systems and techniques described herein can process LIDAR data on one or more CPUs of a computer system such as, for example, an ADSC of a vehicle. By processing LIDAR data on one or more CPUs instead of one or more GPUs, the streaming LIDAR processing performed by the systems and techniques described herein can help reduce a load on one or more GPUs of the computer system (e.g., one or more GPUs of an ADSC on a vehicle). The increased GPU availability can thus lead to reduced P99 times (e.g., P99 latencies) of other nodes that run on and/or utilize the one or more GPUs of the computer system.

The systems and techniques described herein can also provide improvements for camera-LIDAR fusion nodes configured to fuse camera data with LIDAR data. In some examples, the ability to publish partial LIDAR scans of the systems and techniques described herein can reduce a certain amount of wait time that camera-LIDAR fusion nodes otherwise incur in a LIDAR processing pipeline configured to wait for processed LIDAR scans for a full LIDAR revolution, as previously described. For example, if a full LIDAR revolution takes 100ms, the ability to publish partial LIDAR scans of the systems and techniques described herein can reduce a wait time incurred by a camera-LIDAR fusion node by ~50ms.

In some cases, the streaming LIDAR processing according to the systems and techniques described herein can help reduce resource contention on any satellite computer systems, such as satellite ADSCs. If, unlike the streaming LIDAR processing described herein, all camera-LIDAR fusion nodes trigger concurrently once a processed LIDAR scan is published for use by the nodes, the concurrent triggering of such nodes can lead to a spike in resource contention. On the other hand, the streaming LIDAR processing according to the systems and techniques described herein can allow camera-LIDAR fusion nodes to instead trigger asynchronously and/or progressively as their partial LIDAR scans become available to them (e.g., are published for consumption/use). By more evenly spreading out resource demands from such nodes, the streaming LIDAR processing according to the systems and techniques described herein can lead to lower resource contention in the computer system. In some examples, the streaming architecture described herein can also create an option to reduce network traffic congestion on computer systems.

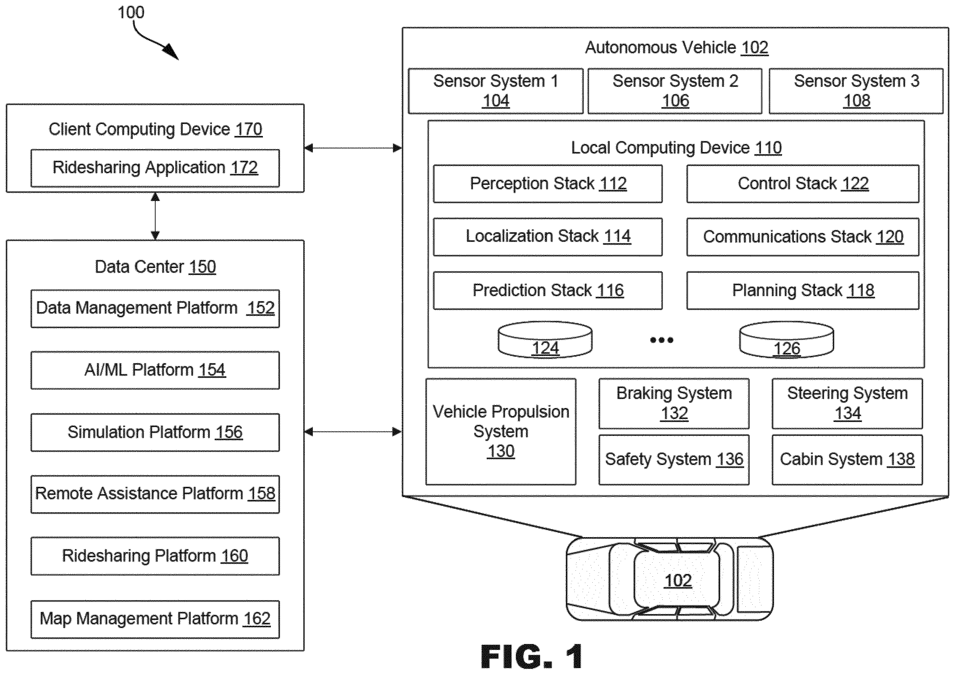

Various examples of the systems and techniques described herein for processing data are illustrated in FIG. 1 through FIG. 6 and described below.

FIG. 1 is a diagram illustrating an example autonomous vehicle (AV) environment 100, according to some examples of the present disclosure. One of ordinary skill in the art will understand that, for the AV environment 100 and any system discussed in the present disclosure, there can be additional or fewer components in similar or alternative configurations. The illustrations and examples provided in the present disclosure are for conciseness and clarity. Other examples may include different numbers and/or types of elements, but one of ordinary skill the art will appreciate that such variations do not depart from the scope of the present disclosure.

In this example, the AV environment 100 includes an AV 102, a data center 150, and a client computing device 170. The AV 102, the data center 150, and the client computing device 170 can communicate with one another over one or more networks (not shown), such as a public network (e.g., the Internet, an Infrastructure as a Service (IaaS) network, a Platform as a Service (PaaS) network, a Software as a Service (SaaS) network, other Cloud Service Provider (CSP) network, etc.), a private network (e.g., a Local Area Network (LAN), a private cloud, a Virtual Private Network (VPN), etc.), and/or a hybrid network (e.g., a multi-cloud or hybrid cloud network, etc.).

The AV 102 can navigate roadways without a human driver based on sensor signals generated by sensor systems 104, 106, and 108. The sensor systems 104-108 can include one or more types of sensors and can be arranged about the AV 102. For instance, the sensor systems 104-108 can include Inertial Measurement Units (IMUs), cameras (e.g., still image cameras, video cameras, etc.), light sensors (e.g., LIDAR systems, ambient light sensors, infrared sensors, etc.), RADAR systems, GPS receivers, audio sensors (e.g., microphones, Sound Navigation and Ranging (SONAR) systems, ultrasonic sensors, etc.), engine sensors, speedometers, tachometers, odometers, altimeters, tilt sensors, impact sensors, airbag sensors, seat occupancy sensors, open/closed door sensors, tire pressure sensors, rain sensors, and so forth. For example, the sensor system 104 can be a camera system, the sensor system 106 can be a LIDAR system, and the sensor system 108 can be a RADAR system. Other examples may include any other number and type of sensors.

The AV 102 can also include several mechanical systems that can be used to maneuver or operate the AV 102. For instance, the mechanical systems can include a vehicle propulsion system 130, a braking system 132, a steering system 134, a safety system 136, and a cabin system 138, among other systems. The vehicle propulsion system 130 can include an electric motor, an internal combustion engine, or both. The braking system 132 can include an engine brake, brake pads, actuators, and/or any other suitable componentry configured to assist in decelerating the AV 102. The steering system 134 can include suitable componentry configured to control the direction of movement of the AV 102 during navigation. The safety system 136 can include lights and signal indicators, a parking brake, airbags, and so forth. The cabin system 138 can include cabin temperature control systems, in-cabin entertainment systems, and so forth. In some examples, the AV 102 might not include human driver actuators (e.g., steering wheel, handbrake, foot brake pedal, foot accelerator pedal, turn signal lever, window wipers, etc.) for controlling the AV 102. Instead, the cabin system 138 can include one or more client interfaces (e.g., Graphical User Interfaces (GUIs), Voice User Interfaces (VUIs), etc.) for controlling certain aspects of the mechanical systems 130-138.

The AV 102 can include a local computing device 110 that is in communication with the sensor systems 104-108, the mechanical systems 130-138, the data center 150, and/or the client computing device 170, among other systems. The local computing device 110 can include one or more processors and memory, including instructions that can be executed by the one or more processors. The instructions can make up one or more software stacks or components responsible for controlling the AV 102; communicating with the data center 150, the client computing device 170, and other systems; receiving inputs from riders, passengers, and other entities within the AV's environment; logging metrics collected by the sensor systems 104-108; and so forth. In this example, the local computing device 110 includes a perception stack 112, a mapping and localization stack 114, a prediction stack 116, a planning stack 118, a communications stack 120, a control stack 122, an AV operational database 124, and an HD geospatial database 126, among other stacks and systems.

The perception stack 112 can enable the AV 102 to "see" (e.g., via cameras, LIDAR sensors, infrared sensors, etc.), "hear" (e.g., via microphones, ultrasonic sensors, RADAR, etc.), and "feel" (e.g., pressure sensors, force sensors, impact sensors, etc.) its environment using information from the sensor systems 104-108, the mapping and localization stack 114, the HD geospatial database 126, other components of the AV, and/or other data sources (e.g., the data center 150, the client computing device 170, third party data sources, etc.). The perception stack 112 can detect and classify objects and determine their current locations, speeds, directions, and the like. In addition, the perception stack 112 can determine the free space around the AV 102 (e.g., to maintain a safe distance from other objects, change lanes, park the AV, etc.). The perception stack 112 can identify environmental uncertainties, such as where to look for moving objects, flag areas that may be obscured or blocked from view, and so forth. In some examples, an output of the prediction stack can be a bounding area around a perceived object that can be associated with a semantic label that identifies the type of object that is within the bounding area, the kinematic of the object (information about its movement), a tracked path of the object, and a description of the pose of the object (its orientation or heading, etc.).

The mapping and localization stack 114 can determine the AV's position and orientation (pose) using different methods from multiple systems (e.g., GPS, IMUs, cameras, LIDAR, RADAR, ultrasonic sensors, the HD geospatial database 126, etc.). For example, in some cases, the AV 102 can compare sensor data captured in real-time by the sensor systems 104-108 to data in the HD geospatial database 126 to determine its precise (e.g., accurate to the order of a few centimeters or less) position and orientation. The AV 102 can focus its search based on sensor data from one or more first sensor systems (e.g., GPS) by matching sensor data from one or more second sensor systems (e.g., LIDAR). If the mapping and localization information from one system is unavailable, the AV 102 can use mapping and localization information from a redundant system and/or from remote data sources.

The prediction stack 116 can receive information from the localization stack 114 and objects identified by the perception stack 112 and predict a future path for the objects. In some examples, the prediction stack 116 can output several likely paths that an object is predicted to take along with a probability associated with each path. For each predicted path, the prediction stack 116 can also output a range of points along the path corresponding to a predicted location of the object along the path at future time intervals along with an expected error value for each of the points that indicates a probabilistic deviation from that point.

The planning stack 118 can determine how to maneuver or operate the AV 102 safely and efficiently in its environment. For example, the planning stack 118 can receive the location, speed, and direction of the AV 102, geospatial data, data regarding objects sharing the road with the AV 102 (e.g., pedestrians, bicycles, vehicles, ambulances, buses, cable cars, trains, traffic lights, lanes, road markings, etc.) or certain events occurring during a trip (e.g., emergency vehicle blaring a siren, intersections, occluded areas, street closures for construction or street repairs, double-parked cars, etc.), traffic rules and other safety standards or practices for the road, user input, and other relevant data for directing the AV 102 from one point to another and outputs from the perception stack 112, localization stack 114, and prediction stack 116. The planning stack 118 can determine multiple sets of one or more mechanical operations that the AV 102 can perform (e.g., go straight at a specified rate of acceleration, including maintaining the same speed or decelerating; turn on the left blinker, decelerate if the AV is above a threshold range for turning, and turn left; turn on the right blinker, accelerate if the AV is stopped or below the threshold range for turning, and turn right; decelerate until completely stopped and reverse; etc.), and select the best one to meet changing road conditions and events. If something unexpected happens, the planning stack 118 can select from multiple backup plans to carry out. For example, while preparing to change lanes to turn right at an intersection, another vehicle may aggressively cut into the destination lane, making the lane change unsafe. The planning stack 118 could have already determined an alternative plan for such an event. Upon its occurrence, it could help direct the AV 102 to go around the block instead of blocking a current lane while waiting for an opening to change lanes.

The control stack 122 can manage the operation of the vehicle propulsion system 130, the braking system 132, the steering system 134, the safety system 136, and the cabin system 138. The control stack 122 can receive sensor signals from the sensor systems 104-108 as well as communicate with other stacks or components of the local computing device 110 or a remote system (e.g., the data center 150) to effectuate operation of the AV 102. For example, the control stack 122 can implement the final path or actions from the multiple paths or actions provided by the planning stack 118. This can involve turning the routes and decisions from the planning stack 118 into commands for the actuators that control the AV's steering, throttle, brake, and drive unit.

The communications stack 120 can transmit and receive signals between the various stacks and other components of the AV 102 and between the AV 102, the data center 150, the client computing device 170, and other remote systems. The communications stack 120 can enable the local computing device 110 to exchange information remotely over a network, such as through an antenna array or interface that can provide a metropolitan WIFI network connection, a mobile or cellular network connection (e.g., Third Generation (3G), Fourth Generation (4G), Long-Term Evolution (LTE), 5th Generation (5G), etc.), and/or other wireless network connection (e.g., License Assisted Access (LAA), Citizens Broadband Radio Service (CBRS), MULTEFIRE, etc.). The communications stack 120 can also facilitate the local exchange of information, such as through a wired connection (e.g., a user's mobile computing device docked in an in-car docking station or connected via Universal Serial Bus (USB), etc.) or a local wireless connection (e.g., Wireless Local Area Network (WLAN), Bluetooth^{®}, infrared, etc.).

The HD geospatial database 126 can store HD maps and related data of the streets upon which the AV 102 travels. In some examples, the HD maps and related data can comprise multiple layers, such as an areas layer, a lanes and boundaries layer, an intersections layer, a traffic controls layer, and so forth. The areas layer can include geospatial information indicating geographic areas that are drivable (e.g., roads, parking areas, shoulders, etc.) or not drivable (e.g., medians, sidewalks, buildings, etc.), drivable areas that constitute links or connections (e.g., drivable areas that form the same road) versus intersections (e.g., drivable areas where two or more roads intersect), and so on. The lanes and boundaries layer can include geospatial information of road lanes (e.g., lane centerline, lane boundaries, type of lane boundaries, etc.) and related attributes (e.g., direction of travel, speed limit, lane type, etc.). The lanes and boundaries layer can also include three-dimensional (3D) attributes related to lanes (e.g., slope, elevation, curvature, etc.). The intersections layer can include geospatial information of intersections (e.g., crosswalks, stop lines, turning lane centerlines and/or boundaries, etc.) and related attributes (e.g., permissive, protected/permissive, or protected only left turn lanes; legal or illegal u-turn lanes; permissive or protected only right turn lanes; etc.). The traffic controls lane can include geospatial information of traffic signal lights, traffic signs, and other road objects and related attributes.

The AV operational database 124 can store raw AV data generated by the sensor systems 104-108, stacks 112-122, and other components of the AV 102 and/or data received by the AV 102 from remote systems (e.g., the data center 150, the client computing device 170, etc.). In some examples, the raw AV data can include HD LIDAR point cloud data, image data, RADAR data, GPS data, and other sensor data that the data center 150 can use for creating or updating AV geospatial data or for creating simulations of situations encountered by AV 102 for future testing or training of various machine learning algorithms that are incorporated in the local computing device 110.

The data center 150 can include a private cloud (e.g., an enterprise network, a co-location provider network, etc.), a public cloud (e.g., an Infrastructure as a Service (IaaS) network, a Platform as a Service (PaaS) network, a Software as a Service (SaaS) network, or other Cloud Service Provider (CSP) network), a hybrid cloud, a multi-cloud, and/or any other network. The data center 150 can include one or more computing devices remote to the local computing device 110 for managing a fleet of AVs and AV-related services. For example, in addition to managing the AV 102, the data center 150 may also support a ridesharing service, a delivery service, a remote/roadside assistance service, street services (e.g., street mapping, street patrol, street cleaning, street metering, parking reservation, etc.), and the like.

The data center 150 can send and receive various signals to and from the AV 102 and the client computing device 170. These signals can include sensor data captured by the sensor systems 104-108, roadside assistance requests, software updates, ridesharing pick-up and drop-off instructions, and so forth. In this example, the data center 150 includes a data management platform 152, an Artificial Intelligence/Machine Learning (AI/ML) platform 154, a simulation platform 156, a remote assistance platform 158, and a ridesharing platform 160, and a map management platform 162, among other systems.

The data management platform 152 can be a "big data" system capable of receiving and transmitting data at high velocities (e.g., near real-time or real-time), processing a large variety of data and storing large volumes of data (e.g., terabytes, petabytes, or more of data). The varieties of data can include data having different structures (e.g., structured, semi-structured, unstructured, etc.), data of different types (e.g., sensor data, mechanical system data, ridesharing service, map data, audio, video, etc.), data associated with different types of data stores (e.g., relational databases, key-value stores, document databases, graph databases, column-family databases, data analytic stores, search engine databases, time series databases, object stores, file systems, etc.), data originating from different sources (e.g., AVs, enterprise systems, social networks, etc.), data having different rates of change (e.g., batch, streaming, etc.), and/or data having other characteristics. The various platforms and systems of the data center 150 can access data stored by the data management platform 152 to provide their respective services.

The AI/ML platform 154 can provide the infrastructure for training and evaluating machine learning algorithms for operating the AV 102, the simulation platform 156, the remote assistance platform 158, the ridesharing platform 160, the map management platform 162, and other platforms and systems. Using the AI/ML platform 154, data scientists can prepare data sets from the data management platform 152; select, design, and train machine learning models; evaluate, refine, and deploy the models; maintain, monitor, and retrain the models; and so on.

The simulation platform 156 can enable testing and validation of the algorithms, machine learning models, neural networks, and other development efforts for the AV 102, the remote assistance platform 158, the ridesharing platform 160, the map management platform 162, and other platforms and systems. The simulation platform 156 can replicate a variety of driving environments and/or reproduce real-world scenarios from data captured by the AV 102, including rendering geospatial information and road infrastructure (e.g., streets, lanes, crosswalks, traffic lights, stop signs, etc.) obtained from the map management platform 162 and/or a cartography platform; modeling the behavior of other vehicles, bicycles, pedestrians, and other dynamic elements; simulating inclement weather conditions, different traffic scenarios; and so on.

The remote assistance platform 158 can generate and transmit instructions regarding the operation of the AV 102. For example, in response to an output of the AI/ML platform 154 or other system of the data center 150, the remote assistance platform 158 can prepare instructions for one or more stacks or other components of the AV 102.

The ridesharing platform 160 can interact with a customer of a ridesharing service via a ridesharing application 172 executing on the client computing device 170. The client computing device 170 can be any type of computing system such as, for example and without limitation, a server, desktop computer, laptop computer, tablet computer, smartphone, smart wearable device (e.g., smartwatch, smart eyeglasses or other Head-Mounted Display (HMD), smart ear pods, or other smart in-ear, on-ear, or over-ear device, etc.), gaming system, or any other computing device for accessing the ridesharing application 172. In some cases, the client computing device 170 can be a customer's mobile computing device or a computing device integrated with the AV 102 (e.g., the local computing device 110). The ridesharing platform 160 can receive requests to pick up or drop off from the ridesharing application 172 and dispatch the AV 102 for the trip.

Map management platform 162 can provide a set of tools for the manipulation and management of geographic and spatial (geospatial) and related attribute data. The data management platform 152 can receive LIDAR point cloud data, image data (e.g., still image, video, etc.), RADAR data, GPS data, and other sensor data (e.g., raw data) from one or more AVs (e.g., AV 102), Unmanned Aerial Vehicles (UAVs), satellites, third-party mapping services, and other sources of geospatially referenced data. The raw data can be processed, and map management platform 162 can render base representations (e.g., tiles (2D), bounding volumes (3D), etc.) of the AV geospatial data to enable users to view, query, label, edit, and otherwise interact with the data. Map management platform 162 can manage workflows and tasks for operating on the AV geospatial data. Map management platform 162 can control access to the AV geospatial data, including granting or limiting access to the AV geospatial data based on user-based, role-based, group-based, task-based, and other attribute-based access control mechanisms. Map management platform 162 can provide version control for the AV geospatial data, such as to track specific changes that (human or machine) map editors have made to the data and to revert changes when necessary. Map management platform 162 can administer release management of the AV geospatial data, including distributing suitable iterations of the data to different users, computing devices, AVs, and other consumers of HD maps. Map management platform 162 can provide analytics regarding the AV geospatial data and related data, such as to generate insights relating to the throughput and quality of mapping tasks.

In some examples, the map viewing services of map management platform 162 can be modularized and deployed as part of one or more of the platforms and systems of the data center 150. For example, the AI/ML platform 154 may incorporate the map viewing services for visualizing the effectiveness of various object detection or object classification models, the simulation platform 156 may incorporate the map viewing services for recreating and visualizing certain driving scenarios, the remote assistance platform 158 may incorporate the map viewing services for replaying traffic incidents to facilitate and coordinate aid, the ridesharing platform 160 may incorporate the map viewing services into the ridesharing application 172 to enable passengers to view the AV 102 in transit to a pick-up or drop-off location, and so on.

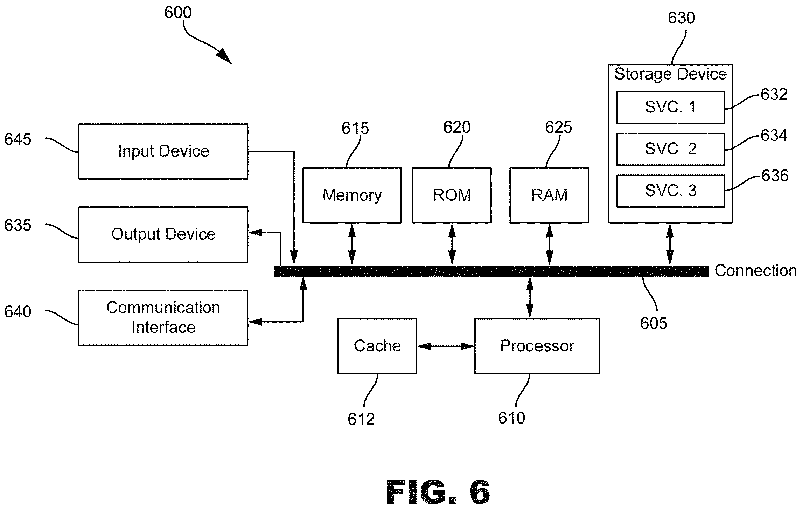

While the AV 102, the local computing device 110, and the AV environment 100 are shown to include certain systems and components, one of ordinary skill will appreciate that the AV 102, the local computing device 110, and/or the AV environment 100 can include more or fewer systems and/or components than those shown in FIG. 1. For example, the AV 102 can include other services than those shown in FIG. 1 and the local computing device 110 can also include, in some instances, one or more memory devices (e.g., RAM, ROM, cache, and/or the like), one or more network interfaces (e.g., wired and/or wireless communications interfaces and the like), and/or other hardware or processing devices that are not shown in FIG. 1. An illustrative example of a computing device and hardware components that can be implemented with the local computing device 110 is described below with respect to FIG. 6.

In some examples, the local computing device 110 of the AV 102 can include an ADSC. Moreover, the local computing device 110 can be configured to implement the systems and techniques described herein. For example, the local computing device 110 can be configured to implement the streaming LIDAR processing described herein.

As previously explained, a LIDAR preprocessing pipeline that involves waiting for a full revolution of LIDAR data to begin preprocessing the LIDAR data can lead visual artifacts. For example, a LIDAR system (e.g., sensor system 104, sensor system 106, sensor system 108) can capture a full revolution of LIDAR data (e.g., a full LIDAR scan) every n interval of time, where n is a positive number greater than zero. Thus, the data collected at the start of the LIDAR scan is *n* amount of time older than the data collected at the end of the LIDAR scan, where the *n* amount of time is based on the n interval of time associated with each full revolution of LIDAR data. To illustrate, if it takes the LIDAR system 100 milliseconds (ms) to capture a full revolution of LIDAR data, then the LIDAR data collected at the start of the LIDAR scan is 100ms older than the LIDAR data collected at the end of the LIDAR scan. When a full revolution of LIDAR data is wrapped around to create a 360° representation, a split plane can form where the start and the end of the LIDAR data join as the LIDAR data on one side of the split plane is 100ms older than the LIDAR data on the other side of the split plane.

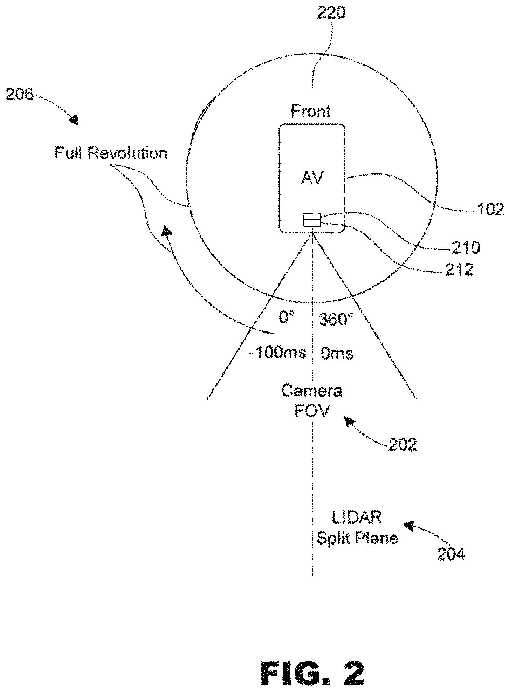

FIG. 2 is a diagram illustrating an example split plane formed when the start and end of sensor data join after a full revolution (e.g., 360 degrees) of one or more sensors. As shown, the AV 102 implements at least a LIDAR sensor 210 and a camera sensor 212. The camera sensor 212 in this example resides on an end of the AV 102 opposite to the front 220 of the AV 102 (e.g., on a rear of the AV 102) and has a particular field-of-view (FOV) that is within the coverage of the LIDAR sensor 210 (e.g., within the full revolution 206). The LIDAR sensor 210 spins around about an axis of the LIDAR sensor 210 to perform a full revolution 206, and collects LIDAR data as it spins (e.g., as it performs the full revolution 206) to obtain a full revolution of LIDAR data (e.g., LIDAR data covering 360 degrees of rotation by the LIDAR sensor 210).

In the illustrative example of FIG. 2, the full revolution 206 takes 100ms. The 100ms is merely an example provided for explanation purposes. One of ordinary skill in the art will recognize that, in other cases, a full revolution by a LIDAR sensor can take more or less than 100ms. Since the full revolution 206 takes 100ms, there is a time difference of 100ms between the LIDAR data captured at the start and the end of the full revolution 206. Such a lag between the LIDAR data captured at the beginning of the full revolution 206 and the LIDAR data captured at the end of the full revolution 206 can cause visual artifacts when the LIDAR data for the full revolution 206 is fused with image data (e.g., a frame/image) captured by the camera sensor 212.

When the full revolution of LIDAR data is wrapped around to create a 360° representation, a split plane 204 can form where the start and the end of the LIDAR data join as the LIDAR data on one side of the split plane is 100ms older than the LIDAR data on the other side of the split plane. For example, in FIG. 2, the LIDAR data at the left side of the split plane 204 is 100ms older than the LIDAR data on the right side of the split plane 204.

As shown, the full revolution 206 allows the LIDAR sensor 210 to capture LIDAR data covering 360° around the AV 102. Moreover, the FOV 202 of the camera sensor 212 is within the 360°-degree coverage of the LIDAR data. However, if a full revolution of LIDAR data is wrapped around to create a 360° representation, the split plane 204 can form as previously described and the lag in completing the full revolution 206 can lead to the LIDAR data on one side of the split plane 204 (e.g., the LIDAR data on the left of the split plane 204 in FIG. 2) is 100ms older than the LIDAR data on the other side of the split plane (e.g., the LIDAR data on the right side of the split plane 204 in FIG. 2). The difference in the time/age of the LIDAR data on one side of the split plane 204 and the LIDAR data on another side of the split plane 204 can cause visual artifacts.

For example, if the local computing device 110 fuses the LIDAR data from the LIDAR sensor 210 with an image from the camera sensor 212, because of the difference in the time/age of the LIDAR data on one side of the split plane 204 and the LIDAR data on another side of the split plane 204, the fused camera-LIDAR output can have lag in certain portions of LIDAR data and mismatches between the position of objects depicted in the image from the camera sensor 212 and the position of the same objects in the LIDAR data.

FIG. 3 is a diagram illustrating an example fusion 300 of LIDAR and camera data resulting in temporal artifacts. The temporal artifacts are created when LIDAR data from a LIDAR sensor (e.g., LIDAR sensor 210) is projected over an image 302 from a camera sensor (e.g., camera sensor 212) after a full revolution of a LIDAR sensor. The LIDAR data includes a full revolution of LIDAR data collected by a LIDAR sensor and published after the full revolution. In this example, a full revolution of the LIDAR sensor associated with the LIDAR data takes the LIDAR sensor about 100ms. Thus, there is a lag of 100ms between the LIDAR data collected by the LIDAR sensor at the beginning of its scan and the end of its scan.

For example, as shown in FIG. 3, a full revolution of LIDAR data can be wrapped around to create a 360° representation which is fused with an image 302 captured by an image sensor of the AV 102. When the full revolution of LIDAR data is wrapped around to create a 360° representation, the split plane 204 can form where the LIDAR data on one side (e.g., the left side) of the split plane 204 is 100ms older than the LIDAR data on the other side (e.g., the right side) of the split plane 204. If the LIDAR preprocessing pipeline waits for a full revolution of LIDAR data to begin preprocessing the LIDAR data, the resulting LIDAR data can include visual artifacts caused by the difference in time between the LIDAR data on one side of the split plane 204 and the LIDAR data on the other side of the split plane 204.

In FIG. 3, the example fusion 300 depicts vehicles 310, 320, 330 within a scene. The fusion 300 also depicts LIDAR point clouds 312, 322, 332 corresponding to LIDAR data collected by a LIDAR sensor of the AV 102. The LIDAR point clouds 312, 322, 332 provide representations of the vehicles 310, 320, 330 (and/or their associated positions, dimensions, and/or other aspects) as detected by the LIDAR sensor of the AV 102. For example, the fusion 300 can include a LIDAR point cloud 312 providing a representation of the vehicle 310 as detected by the LIDAR sensor during a full revolution, a LIDAR point cloud 322 providing a representation of the vehicle 320 as detected by the LIDAR sensor during a full revolution, and a LIDAR point cloud 332 providing a representation of the vehicle 330 as detected by the LIDAR sensor during a full revolution.

The LIDAR point cloud 312 includes LIDAR data on the left side of the split plane 204 and the LIDAR point cloud 322 and the LIDAR point cloud 332 include LIDAR data on the right side of the split plane 204. Thus, the LIDAR point cloud 312 is up to 100ms older than the LIDAR point cloud 322 and the LIDAR point cloud 332. The difference in time or lag between LIDAR point clouds can cause visual artifacts such as ghosting effects, lagging effects, misalignment between point clouds corresponding to detected objects and the objects within the image captured by the camera sensor, and/or any other visual artifacts.

For example, in FIG. 3, the LIDAR point cloud 312 is synchronized and/or aligned with the vehicle 310 in the fusion 300. This is because there is no movement (or limited movement such as movement below a threshold) of the vehicle 310 in the scene between the time that the LIDAR point cloud 312 was obtained/generated and the time that the image 302 depicting the vehicle 310 was captured. On the other hand, the LIDAR point cloud 322 and the LIDAR point cloud 332 are not synchronized and/or aligned with the vehicles they represent within the image 302; namely, vehicle 320 corresponding to the LIDAR point cloud 322 and vehicle 330 corresponding to the LIDAR point cloud 332. This is because there is motion in the scene (e.g., the vehicles are moving) and there is a lag between the time when the image 302 depicting the vehicles 320 and 330 was captured and the time when the LIDAR point clouds 322 and 332 were collected/generated.

To illustrate, the image 302 depicts the vehicles 320 and 330 in their respective positions at the time that the camera sensor captured the image 302. The LIDAR point clouds 322 and 332 depict LIDAR-based representations of the vehicles 320 and 330 and their respective positions at the time that the LIDAR point clouds 322 and 332 were collected/generated. Because the vehicles 320 and 330 are in motion at the time that the LIDAR sensor performed a full revolution to collect a full revolution of LIDAR data, including the LIDAR point clouds 322 and 332, the vehicles 320 and 330 will have different positions at the time of the start of the collection of LIDAR data (e.g., at the beginning of the full revolution) and the time of the end of the collection of LIDAR data (e.g., at the end of the full revolution). Accordingly, the position of the vehicles 320 and 330 has changed from the time that the image 302 depicting the vehicles 320 and 330 was captured and the time that the LIDAR data corresponding to the LIDAR point clouds 322 and 332 representing the vehicles 320 and 330 was captured.

Consequently, when the image 302 is fussed with the LIDAR point clouds 312, 322, 332, the LIDAR data collected at the beginning of the LIDAR sensor revolution (e.g., the data corresponding to the LIDAR point cloud 312) and the capturing of the image 302 will be synchronized and/or aligned with the image 302 and the LIDAR data collected at the end of the LIDAR sensor revolution (e.g., the data corresponding to the LIDAR point clouds 322 and 332) and the capturing of the image 302 will not be synchronized and/or aligned with the image 302. In other words, while the position of the vehicle 310 depicted in the image 302 matches (e.g., is aligned with) the position of the vehicle 310 as represented in the LIDAR point cloud 312, the position of the vehicles 320 and 330 depicted in the image 302 do not match (are not aligned with) the position of the vehicles 320 and 330 as represented in the LIDAR point clouds 322 and 332. This is because the vehicles 320 and 330 depicted in the image 302 are in motion and there is a lag between the time when the image 302 depicting the vehicles 320 and 330 was captured and the time when the LIDAR data corresponding to the LIDAR point clouds 322 and 332 was collected.

Thus, the position of the vehicles 320 and 330 when the LIDAR data corresponding to the LIDAR point clouds 322 and 332 was collected has changed since their position at the time that the image 302 was captured (e.g., their position depicted in the image 302). The difference between the position of the vehicles 320 and 330 depicted in the image 302 (e.g., their position when the image 302 was captured) and the position of the vehicles 320 and 330 when the LIDAR data associated with the LIDAR point clouds 322 and 332 were collected thus creates a lagging effect as shown in FIG. 3

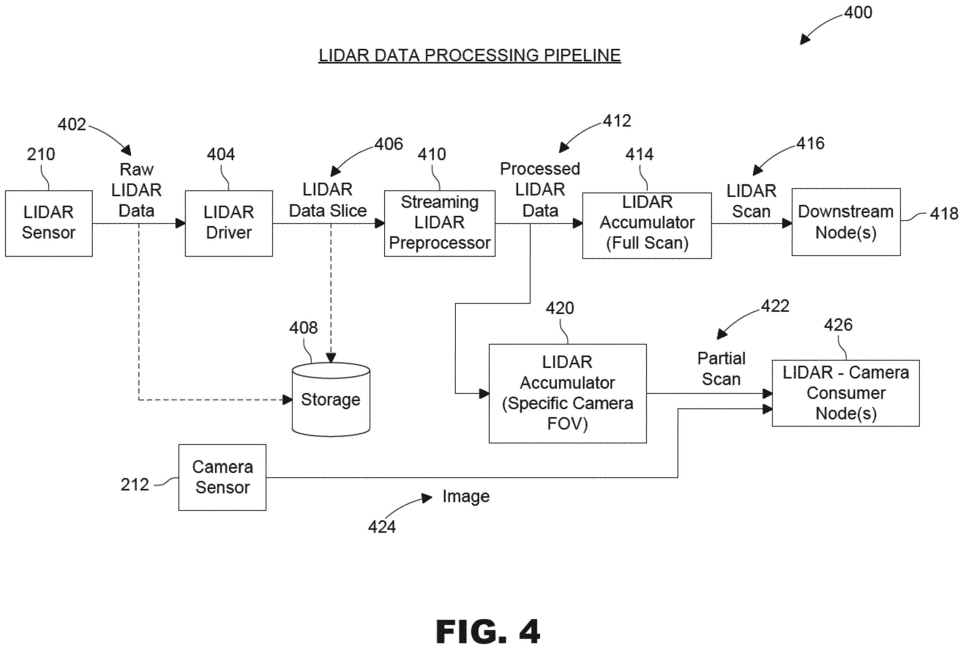

FIG. 4 is a diagram illustrating an example of a LIDAR data processing pipeline 400, in accordance with some examples of the present disclosure. The LIDAR data processing pipeline 400 can include streaming of LIDAR data slices or partial LIDAR scans as the LIDAR data is obtained, rather than waiting for a full revolution of LIDAR data before processing and/or publishing the LIDAR data.

In this example, the LIDAR sensor 210 can collect raw LIDAR data 402 to be processed by the LIDAR data processing pipeline 400. The LIDAR sensor 210 can be configured to rotate about an axis of the LIDAR sensor 210 while it collects the raw LIDAR data in order to obtain a full revolution of raw LIDAR data (e.g., LIDAR having 360 degrees of coverage). The LIDAR sensor 210 can provide the raw LIDAR data 402 to the LIDAR data processing pipeline 400 for processing as the LIDAR sensor 210 collects such raw LIDAR data. For example, the LIDAR sensor 210 can collect and provide partial LIDAR scans spanning or having n degrees of coverage out of the full 360 degrees of coverage of a full LIDAR scan. As the LIDAR sensor 210 collects a new partial LIDAR scan having n degrees of coverage, it can provide such partial LIDAR scan to the LIDAR data processing pipeline 400, rather than waiting until a full revolution of LIDAR data is obtained and then providing the full revolution of LIDAR data to the LIDAR data processing pipeline 400 which, as previously explained, can cause various issues such as, for example, visual artifacts including lagging or ghosting effects.

As shown, the LIDAR sensor 210 can collect and provide raw LIDAR data 402 to a driver 404 of the LIDAR sensor 210. The driver 404 can include software configured to consume the raw LIDAR data 402 from the LIDAR sensor 210 and use the raw LIDAR data 402 to produce a LIDAR data slice 406. In some cases, the driver 404 can adjust one or more aspects or components of the raw LIDAR data 402 to produce the LIDAR data slice 406. For example, in some cases, the driver 404 can encapsulate the raw LIDAR data 402 (with or without reformatting the raw LIDAR data 402) in a packet used to provide the LIDAR data to other nodes and/or recipients. In some examples, the driver 404 can encapsulate the raw LIDAR data 402 in user datagram protocol (UDP) packets. In other examples, the driver 404 can encapsulate the raw LIDAR data 402 in other types of packets and/or modify an aspect(s) of the raw LIDAR data 402, such as a formatting, before providing the data to one or more LIDAR data consumers.

The size of the LIDAR data slice 406 can be configurable. For example, the driver 404 can configure and/or select the size of the LIDAR data slice 406 based on one or more factors such as, for example, a desired LIDAR data processing and/or publishing rate; an amount of motion of targets represented, measured, and/or depicted by the LIDAR data slice 406; a desired reduction or elimination of misalignment and/or lag between the LIDAR data and image data captured by a camera sensor of the AV 102; a maximum amount of lag between portions of LIDAR data captured during a full revolution of the LIDAR sensor 210; a maximum amount of lag between portions of a sequence of LIDAR data captured during a full revolution of the LIDAR sensor 210; resource capabilities and/or constraints of a computer system (e.g., local computing device 110) and/or associated nodes implementing the LIDAR data processing pipeline 400 and/or portions thereof; and/or any other factors. In some examples, the driver 404 can configure the size of the LIDAR data slice 406 to achieve a reasonably small slice (e.g., a slice having a size that does not exceed a threshold) of LIDAR data to gain streaming benefits (e.g., benefits of streaming slices of LIDAR data as opposed to full revolutions of LIDAR data) without leading to excessive (e.g., beyond a threshold amount) process wake-ups from publishing LIDAR data at a rate that is high or too high (e.g., at a rate that exceeds a threshold).

In some examples, the size of the LIDAR data slice 406 can cover and/or correspond to a certain degree of coverage that is less than a full 360° revolution. For example, the driver 404 can publish LIDAR data slices at a rate of 600Hz (e.g., corresponding to a 6° slice), 300Hz (e.g., corresponding to a 12° slice), 150Hz (e.g., corresponding to a 24° slice), or any other rate corresponding to a slice having a size (e.g., in degrees) that is less than a full revolution (e.g., less than 360°).

The driver 404 can optionally save the LIDAR data slice 406 in a storage 408 (e.g., AV operational database 124) for future use by one or more LIDAR data consumers. For example, the driver 404 can save the LIDAR data slice 406 in the storage 408 so the data can be replayed offline and/or in the future. Moreover, the driver 404 can provide the LIDAR data slice 406 to a streaming LIDAR preprocessor 410, which can perform pre-processing operations on the LIDAR data slice 406. Non-limiting examples of pre-processing operations that the streaming LIDAR preprocessor 410 can perform on the LIDAR data slice 406 and/or the LIDAR sensor 210 can include filtering, transform/transformation operations, alignment operations, calibration, row shifting, translations, formatting, validating, and/or any other pre-processing operations.

For example, the streaming LIDAR preprocessor 410 can filter out LIDAR data points corresponding to certain reflections of light from one or more objects such as, for example, a vehicle, a structure, a human, an animal, etc. As another example, when the LIDAR sensor 210 captures the raw LIDAR data 402, it can do so from a frame of reference of the LIDAR sensor 210. Thus, the LIDAR data slice 406 received by the streaming LIDAR preprocessor 410 can be from the frame of reference of the LIDAR sensor 210. The streaming LIDAR preprocessor 410 can perform a transform operation or translation to translate the LIDAR data in the LIDAR data slice 406 to actual three-dimensional (3D) coordinates in the real world. For example, the streaming LIDAR preprocessor 410 can translate the LIDAR data from the frame of reference of the LIDAR sensor 210 to another frame of reference.

To illustrate, in cases where the LIDAR data processing pipeline 400 is implemented by a vehicle (e.g., AV 102) or a computer system of the vehicle (e.g., the local computing device 110), the streaming LIDAR preprocessor 410 can translate the LIDAR data from the frame of reference of the LIDAR sensor 210 to the frame of reference of vehicle. This way, the computing system of the vehicle can better correlate the LIDAR data translated to the frame of reference of the vehicle to other things in the vehicle and/or a scene of the vehicle, such as other sensor data, a position of the vehicle within a scene, a position of one or more objects in the scene relative to the vehicle, etc.

In some cases, the streaming LIDAR preprocessor 410 can align the LIDAR data with image data from a camera sensor 212. For example, if there is any misalignment between an object depicted in the image data from the camera sensor 212 and a LIDAR point cloud representing that object, the streaming LIDAR preprocessor 410 can synchronize or realign the positioning of the LIDAR point cloud and/or the object depicted in the image data to ensure the position of the object as reflected in the LIDAR data matches or aligns to the position of the object as reflected in the image data.

In some examples, the streaming LIDAR preprocessor 410 can perform pointwise operations on the LIDAR data slice 406, convert the LIDAR data in the LIDAR data slice 406 from a sensor frame of reference to a motion-corrected frame of reference, perform row shifting on at least a portion of the LIDAR data in the LIDAR data slice 406, and/or publish a slice of the processed LIDAR data 412.

The streaming LIDAR preprocessor 410 can provide the processed LIDAR data 412 to a LIDAR accumulator 414 that is configured to accumulate and/or aggregate LIDAR data for a full revolution (e.g., for 360 degrees of coverage). The processed LIDAR data 412 can include a slice of LIDAR data having less than a full revolution of coverage. In other words, the processed LIDAR data 412 can include a partial scan as opposed to a full, 360° scan. The streaming LIDAR preprocessor 410 can provide the processed LIDAR data 412 to the LIDAR accumulator 414 in a packet(s), such as a UDP packet. Each packet provided by the streaming LIDAR preprocessor 410 to the LIDAR accumulator 414 can include a slice of LIDAR data that covers less than a full revolution of the LIDAR sensor 210.

The LIDAR accumulator 414 can extract the LIDAR data from each packet of LIDAR data it receives from the streaming LIDAR preprocessor 410 and accumulate or aggregate the LIDAR data to generate a LIDAR scan 416. The LIDAR scan 416 can include the accumulated LIDAR data and/or can have a combined coverage of the LIDAR data accumulated/aggregated. The LIDAR scan 416 can include multiple slices of LIDAR data. Moreover, the LIDAR scan 416 can provide a full revolution of coverage. In other words, the LIDAR scan 416 can include LIDAR data with 360 degrees of coverage. For example, the streaming LIDAR accumulator 414 can fuse or stitch together multiple slices of LIDAR data that, together, make up a full scan of LIDAR data having a full 360 degrees of coverage. The LIDAR accumulator 414 can then provide the LIDAR scan 416 to one or more downstream nodes 418 configured to consume and use the LIDAR scan 416.

In some cases, the LIDAR accumulator 414 can split LIDAR returns into primary and secondary returns. For example, when the LIDAR sensor 210 transmits a beam directed at a target, the beam can reflect from the target and produce two returns. One of the returns can be a primary return reflected from the target, and a secondary return that includes a return that has bounced from the target and one or more additional surfaces in the scene before being received by the LIDAR sensor 210. The LIDAR accumulator 414 can split the LIDAR signals received by the LIDAR sensor 210 from a beam directed at a target into primary and secondary returns. Certain downstream nodes may only be configured to consume (and/or may have a preference for) primary returns, secondary returns, or both primary and secondary returns. Thus, the LIDAR accumulator 414 can split the LIDAR signals into primary and secondary returns to provide the desired returns to any the downstream nodes.

The one or more downstream nodes 418 can include any node configured to consume and use LIDAR data. For example, the one or more downstream nodes 418 can include an object detector node, an object tracker node, a segmentation node, and/or any other nodes.

In some cases, the one or more downstream nodes 418 can include or can be part of one or more software stacks of an operating system of a vehicle such as, for example, a robot operating system (ROS) of AV 102. For example, the one or more downstream nodes 418 can include or can be part of a perception stack of an AV, a planning stack of the AV, and/or any other software stacks.

In addition to providing the processed LIDAR data 412 to the LIDAR accumulator 414, the streaming LIDAR preprocessor 410 can also provide the processed LIDAR data 412 to a different LIDAR accumulator 420. In this example, the LIDAR accumulator 420 can be configured for a FOV of the camera sensor 212. For example, the LIDAR accumulator 420 can be configured to collect LIDAR data and generate a partial LIDAR scan 422 that covers a field-of-view (FOV) of the camera sensor 212. To illustrate, the LIDAR accumulator 420 can be configured to collect LIDAR data having a coverage or field-of-coverage that includes or matches the FOV of the camera sensor 212 and/or that captures a region(s) within the FOV of the camera sensor 212, and generate a partial LIDAR scan 422 that includes/covers the FOV of the camera sensor 212 and/or that depicts or represents a region(s) within the FOV of the camera sensor 212.

In some cases, the LIDAR accumulator 420 can be configured to consume LIDAR data relevant to the FOV of the camera sensor 212. For example, if the camera sensor 212 resides on a rear-middle region of a roof of an AV and has a specific FOV based on its position on the roof of the AV, the LIDAR accumulator 420 can be configured to collect and accumulate/aggregate LIDAR data having a coverage (and/or depicting or representing a region) corresponding to the camera sensor 212 on the rear-middle region of the roof of the AV and/or corresponding to and/or including the FOV of the camera sensor 212. In some cases, the LIDAR accumulator 420 can be configured to also consume and accumulate/aggregate LIDAR data from other LIDAR sensors having a different placement on the vehicle and/or either a same FOV as the camera sensor 212 and/or a different FOV than the camera sensor 212. In other cases, the LIDAR accumulator 420 may be configured to only consume and accumulate/aggregate LIDAR data from the LIDAR sensor 210.

In some examples, the LIDAR data processing pipeline 400 can include additional camera sensors and/or LIDAR sensor that are not shown in FIG. 4. For example, the LIDAR data processing pipeline 400 can include multiple camera sensors on a vehicle and multiple LIDAR sensors on the vehicle. The LIDAR data processing pipeline 400 can also include one or more additional LIDAR accumulators configured for a FOV of one or more additional camera sensors. Thus, the LIDAR data processing pipeline 400 can include various LIDAR accumulator configured to collect and accumulate/aggregate LIDAR data from one or more specific camera sensors having one or more respective FOVs.

In the example shown in FIG. 4, the LIDAR data processing pipeline 400 is configured to fuse LIDAR data with camera data. Thus, in this example, the LIDAR accumulator 420 can accumulate and/or aggregate processed LIDAR data (e.g., slices of processed LIDAR data) corresponding and/or having a same FOV as the camera sensor 212. The LIDAR accumulator 420 can generate a partial LIDAR scan 422 that includes one or more slices of processed LIDAR data corresponding to the FOV of the camera sensor 212. For example, the partial LIDAR scan 422 can include a coverage that matches, includes, and/or is aligned with a FOV of the camera sensor 212. This can allow a node(s) configured to consume and fuse LIDAR and camera data to fuse the partial LIDAR scan 422 with an image 424 captured by the camera sensor 212.

Since the partial LIDAR scan 422 can cover and/or include a same region(s) as the FOV of the camera sensor 212, the LIDAR data in the partial LIDAR scan 422 can match and/or can be synchronized/aligned with the image 424. For example, if the partial LIDAR scan 422 and the image 424 both include and/or depict a vehicle in a scene that is within the FOV of the camera sensor 212 and the coverage of the partial LIDAR scan 422, the position of the vehicle as depicted in the image 424 can match and/or substantially align with the position of the vehicle as represented in the partial LIDAR scan 422.

Moreover, the LIDAR data in the partial LIDAR scan 422 and the image 424 from the camera sensor 212 can have a common frame of reference. For example, as previously mentioned the streaming LIDAR preprocessor 410 can perform a transformation on the LIDAR data slice 406 to convert the LIDAR data from a reference frame of the LIDAR sensor 210 to a reference from of a vehicle implementing the LIDAR data processing pipeline 400. Thus, the processed LIDAR data 412 obtained by the LIDAR accumulator 420 and the partial LIDAR scan 422 generated by the LIDAR accumulator 420 can be from a same reference frame as the image 424, which in this example is the reference frame of a vehicle implementing the LIDAR data processing pipeline 400.

The LIDAR accumulator 420 can provide the partial LIDAR scan 422 to a LIDAR-camera consumer node(s) 426. The LIDAR-camera consumer node(s) 426 can also receive the image 424 from the camera sensor 212. The LIDAR-camera consumer node(s) 426 can fuse the image 424 and the partial LIDAR scan 422 to generate a fused camera-LIDAR output. In some examples, the camera-LIDAR output from the LIDAR-camera consumer node(s) 426 can correlate LIDAR data with image data of the image 424. For example, the LIDAR-camera consumer node(s) 426 can use a point cloud in the partial LIDAR scan 422 to generate a bounding box around an object depicted in the image 424. The point cloud can include the object and/or a representation of the object. The position of the object within the image 424 and the partial LIDAR scan 422 can match and/or can be aligned and/or synchronized. Thus, the point cloud in the partial LIDAR scan 422 can correlate to the object in the image 424 and/or can verify/validate a position of the object in 3D space.

In some cases, the LIDAR accumulator 420 and/or another component of the LIDAR data processing pipeline 400 can split a LIDAR signal into primary and secondary returns as previously described with respect to the LIDAR accumulator 414. Moreover, the components of the LIDAR data processing pipeline 400 shown in FIG. 4 are merely non-limiting examples provided for illustration purposes. In some implementations, the LIDAR data processing pipeline 400 can include one or more components that are not shown in FIG. 4 and/or more or less components than those shown in FIG. 4. For example, in some cases, the LIDAR data processing pipeline 400 can include one or more additional camera sensors, one or more additional LIDAR sensors, one or more additional LIDAR accumulators, one or more additional downstream consumer nodes, one or more additional drivers, and/or one or more additional components that are not shown in FIG. 4.

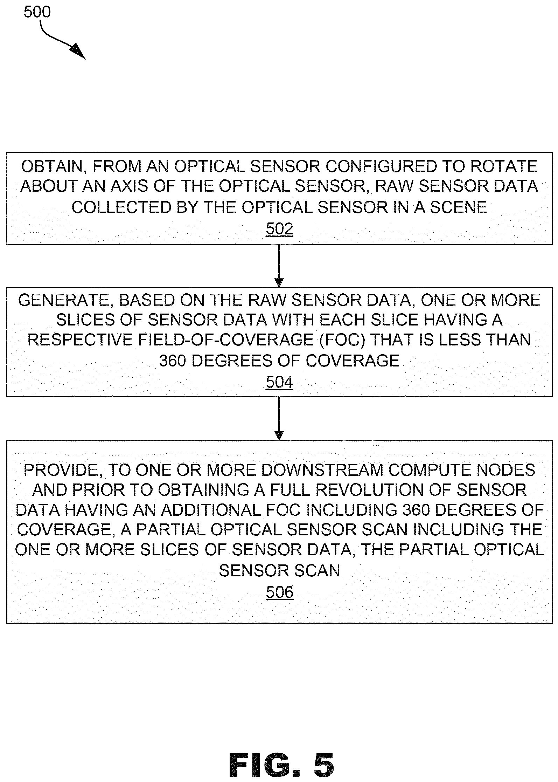

FIG. 5 is a flowchart illustrating an example process 500 for pre-processing data from LIDAR sensors for perception (e.g., for use by a perception stack 112 of an AV 102) using partial LIDAR scans for improved sensor fusion and stack latency. At block 502, the process 500 can include obtaining, from an optical sensor (e.g., LIDAR sensor 210) configured to rotate about an axis of the optical sensor, raw sensor data collected by the optical sensor in a scene. In some examples, the optical sensor can include a LIDAR sensor. The optical sensor can be configured to collect raw sensor data as the optical sensor rotates about the axis of the optical sensor. For example, the optical sensor can be configured to collect raw sensor data as the optical sensor performs a 360 degrees rotation/revolution.

At block 504, the process 500 can include generating, based on the raw sensor data, one or more slices of sensor data. In some examples, each slice of the one or more slices can have a respective field-of-coverage (FOC) that is less than 360 degrees of coverage. As used herein a FOC refers to a region/area in 3D space that can be seen or perceived by the optical sensor, a region/area in 3D space that can be measured by the optical sensor, and/or a region/area in 3D space that can be captured and/or represented in sensor data collected by the optical sensor.

In some examples, the size of each slice can be determined based on a desired rate for publishing a combination of slices of sensor data that yields a 360 degrees of coverage within a threshold amount of time, a number and size of slices estimated to yield a combined FOC of 360 degrees while achieving a desired reduction in a compute resources contention by downstream consumer nodes, and/or a field-of-view (FOV) of one or more camera devices.

At block 506, the process 500 can include providing, to one or more downstream compute nodes (e.g., downstream node(s) 418, LIDAR-camera consumer node(s) 426), a partial optical sensor scan (e.g., partial LIDAR scan 422) including the one or more slices of sensor data. The partial optical sensor scan can be provided to the one or more downstream compute nodes prior to obtaining, from the optical sensor (and/or a different optical sensor), a full revolution of sensor data having an additional FOC that includes 360 degrees of coverage. In some cases, providing the partial optical sensor scan can include generating the partial optical sensor scan. In some examples, the process 500 can generate the partial optical sensor scan by combining/accumulating the one or more slices of sensor data.

In some aspects, the process 500 can include obtaining, from a camera sensor (e.g., camera sensor 212) having a respective FOV that at least partly overlaps with a FOC of the partial optical sensor scan, an image depicting a scene within the respective FOV of the camera sensor; and fusing the image with the partial optical sensor scan. In some cases, the respective FOV of the camera sensor can match the FOC of the partial optical sensor scan. In other cases, the respective FOV of the camera sensor can include a portion(s) that overlaps with the FOC of the partial optical sensor scan and a portion(s) that does not overlap with the FOC of the partial optical sensor scan.

In some aspects, the process 500 can include determining that one or more objects depicted in the image correspond to one or more objects represented in the partial optical sensor scan; and based on the partial optical sensor scan, adding a bounding box around the one or more targets depicted in the image. The one or more targets can include, for example and without limitation, a vehicle, an object, a person, an animal, and/or a structure.

In some aspects, the process 500 can include aligning the partial optical sensor scan with the image; and fusing (e.g., merging, combining, etc.) the partial optical sensor scan with the image further based on the aligning of the partial optical sensor scan with the image.

In some cases, the FOC of the partial optical sensor scan and the size of the partial optical sensor scan can be determined based on the respective FOV of the camera sensor. For example, the process 500 can determine the respective FOV of the camera sensor and, based on the respective FOV, select a size of the partial optical sensor, the FOC of the partial optical sensor scan, and/or a LIDAR accumulator (e.g., LIDAR accumulator 420) to use to process the raw sensor data, generate the one or more slices, and/or generate the partial optical sensor scan.

In some cases, obtaining the raw sensor data can include obtaining an optical signal from the optical sensor. The optical signal can include the raw sensor data. In some aspects, the process 500 can include splitting the optical signal into a primary return and a secondary return; and providing the primary return and/or the secondary return to the one or more downstream consumer nodes.

In some aspects, the process 500 can include translating a frame of reference of the raw sensor data and/or the one or more slices of sensor data from a first frame of reference of the optical sensor to a second frame of reference of a vehicle implementing the optical sensor or a camera sensor of the vehicle.

In some aspects, the process 500 can include obtaining, from an additional optical sensor configured to rotate about an axis of the additional optical sensor, additional raw sensor data collected by the additional optical sensor; selecting an optical sensor data accumulator to process the additional raw sensor data; and generating, based on the additional raw sensor data, one or more additional slices of sensor data. In some cases, each slice of the one or more additional slices can have an FOC that is less than 360 degrees of coverage. In some examples, the optical sensor data accumulator can be selected from a plurality of optical sensor data accumulators based on a FOV of a camera sensor in a vehicle associated with the additional optical sensor.

In some examples, the one or more additional slices of sensor data are generated as the additional raw sensor data is received and without waiting to receive an amount of raw sensor data that has a combined FOC of 360 degrees. In some aspects, the process 500 can include providing, to at least one downstream compute node, a second partial optical sensor scan including the one or more additional slices of sensor data.

Moreover, the raw sensor data and/or the one or more slices can be encapsulated in a packet. In some examples, the packet can include a UDP packet. The packet can include a header and one or more optical sensor signals. Each optical sensor signal can include optical sensor data. In some cases, the optical sensor data can include one or more parameters such as, for example, an azimuth measured for a target in a scene, an elevation measured for the target, a distance and/or depth measured for the target, a timestamp(s), a bitflag(s), and/or any other optical sensor measurements. In some examples, the one or more optical sensor signals can include a primary and secondary signal. For example, the process 500 can receive an optical sensor signal and split the signal into a primary signal and a secondary signal.

In some aspects, the process 500 can include, upon receiving the one or more slices, applying one or more pointwise operations to the one or more slices and/or transforming one or more frames corresponding to the one or more slices into a motion-corrected frame.

FIG. 6 illustrates an example processor-based system with which some aspects of the subject technology can be implemented. For example, processor-based system 600 can be any computing device making up local computing device 110, remote computing system 190, a passenger device executing the ridesharing application 172, or any component thereof in which the components of the system are in communication with each other using connection 605. Connection 605 can be a physical connection via a bus, or a direct connection into processor 610, such as in a chipset architecture. Connection 605 can also be a virtual connection, networked connection, or logical connection.

In some examples, computing system 600 is a distributed system in which the functions described in this disclosure can be distributed within a datacenter, multiple data centers, a peer network, etc. In some cases, one or more of the described system components represents many such components each performing some or all of the function for which the component is described. In some cases, the components can be physical or virtual devices.

Example system 600 includes at least one processing unit (CPU or processor) 610 and connection 605 that couples various system components including system memory 615, such as read-only memory (ROM) 620 and random-access memory (RAM) 625 to processor 610. Computing system 600 can include a cache of high-speed memory 612 connected directly with, in close proximity to, and/or integrated as part of processor 610.

Processor 610 can include any general-purpose processor and a hardware service or software service, such as services 632, 634, and 636 stored in storage device 630, configured to control processor 610 as well as a special-purpose processor where software instructions are incorporated into the actual processor design. Processor 610 may essentially be a completely self-contained computing system, containing multiple cores or processors, a bus, memory controller, cache, etc. A multi-core processor may be symmetric or asymmetric.

To enable user interaction, computing system 600 can include an input device 645, which can represent any number of input mechanisms, such as a microphone for speech, a touch-sensitive screen for gesture or graphical input, keyboard, mouse, motion input, speech, etc. Computing system 600 can also include output device 635, which can be one or more of a number of output mechanisms known to those of skill in the art. In some instances, multimodal systems can enable a user to provide multiple types of input/output to communicate with computing system 600. Computing system 600 can include communications interface 640, which can generally govern and manage the user input and system output. The communication interface may perform or facilitate receipt and/or transmission wired or wireless communications via wired and/or wireless transceivers, including those making use of an audio jack/plug, a microphone jack/plug, a universal serial bus (USB) port/plug, an Apple^{®} Lightning^{®} port/plug, an Ethernet port/plug, a fiber optic port/plug, a proprietary wired port/plug, a BLUETOOTH^{®} wireless signal transfer, a BLUETOOTH^{®} low energy (BLE) wireless signal transfer, an IBEACON^{®} wireless signal transfer, a radio-frequency identification (RFID) wireless signal transfer, near-field communications (NFC) wireless signal transfer, dedicated short range communication (DSRC) wireless signal transfer, 802.11 Wi-Fi wireless signal transfer, wireless local area network (WLAN) signal transfer, Visible Light Communication (VLC), Worldwide Interoperability for Microwave Access (WiMAX), Infrared (IR) communication wireless signal transfer, Public Switched Telephone Network (PSTN) signal transfer, Integrated Services Digital Network (ISDN) signal transfer, 3G/4G/9G/LTE cellular data network wireless signal transfer, ad-hoc network signal transfer, radio wave signal transfer, microwave signal transfer, infrared signal transfer, visible light signal transfer, ultraviolet light signal transfer, wireless signal transfer along the electromagnetic spectrum, or some combination thereof.

Communications interface 640 may also include one or more Global Navigation Satellite System (GNSS) receivers or transceivers that are used to determine a location of the computing system 600 based on receipt of one or more signals from one or more satellites associated with one or more GNSS systems. GNSS systems include, but are not limited to, the US-based Global Positioning System (GPS), the Russia-based Global Navigation Satellite System (GLONASS), the China-based BeiDou Navigation Satellite System (BDS), and the Europe-based Galileo GNSS. There is no restriction on operating on any particular hardware arrangement, and therefore the basic features here may easily be substituted for improved hardware or firmware arrangements as they are developed.

Storage device 630 can be a non-volatile and/or non-transitory computer-readable memory device and can be a hard disk or other types of computer readable media which can store data that are accessible by a computer, such as magnetic cassettes, flash memory cards, solid state memory devices, digital versatile disks, cartridges, a floppy disk, a flexible disk, a hard disk, magnetic tape, a magnetic strip/stripe, any other magnetic storage medium, flash memory, memristor memory, any other solid-state memory, a compact disc read only memory (CD-ROM) optical disc, a rewritable compact disc (CD) optical disc, digital video disk (DVD) optical disc, a blu-ray disc (BDD) optical disc, a holographic optical disk, another optical medium, a secure digital (SD) card, a micro secure digital (microSD) card, a Memory Stick^{®} card, a smartcard chip, a EMV chip, a subscriber identity module (SIM) card, a mini/micro/nano/pico SIM card, another integrated circuit (IC) chip/card, random access memory (RAM), static RAM (SRAM), dynamic RAM (DRAM), read-only memory (ROM), programmable read-only memory (PROM), erasable programmable read-only memory (EPROM), electrically erasable programmable read-only memory (EEPROM), flash EPROM (FLASHEPROM), cache memory (L1/L2/L3/L4/L9/L#), resistive random-access memory (RRAM/ReRAM), phase change memory (PCM), spin transfer torque RAM (STT-RAM), another memory chip or cartridge, and/or a combination thereof.

Storage device 630 can include software services, servers, services, etc., that when the code that defines such software is executed by the processor 610, causes the system to perform a function. In some examples, a hardware service that performs a particular function can include the software component stored in a computer-readable medium in connection with the necessary hardware components, such as processor 610, connection 605, output device 635, etc., to carry out the function.

As understood by those of skill in the art, machine-learning techniques can vary depending on the desired implementation. For example, machine-learning schemes can utilize one or more of the following, alone or in combination: hidden Markov models; recurrent neural networks; convolutional neural networks (CNNs); deep learning; Bayesian symbolic methods; general adversarial networks (GANs); support vector machines; image registration methods; applicable rule-based system. Where regression algorithms are used, they may include including but are not limited to: a Stochastic Gradient Descent Regressor, and/or a Passive Aggressive Regressor, etc.

Machine learning classification models can also be based on clustering algorithms (e.g., a Mini-batch K-means clustering algorithm), a recommendation algorithm (e.g., a Miniwise Hashing algorithm, or Euclidean Locality-Sensitive Hashing (LSH) algorithm), and/or an anomaly detection algorithm, such as a Local outlier factor. Additionally, machine-learning models can employ a dimensionality reduction approach, such as, one or more of: a Mini-batch Dictionary Learning algorithm, an Incremental Principal Component Analysis (PCA) algorithm, a Latent Dirichlet Allocation algorithm, and/or a Mini-batch K-means algorithm, etc.

Aspects within the scope of the present disclosure may also include tangible and/or non-transitory computer-readable storage media or devices for carrying or having computer-executable instructions or data structures stored thereon. Such tangible computer-readable storage devices can be any available device that can be accessed by a general purpose or special purpose computer, including the functional design of any special purpose processor as described above. By way of example, and not limitation, such tangible computer-readable devices can include RAM, ROM, EEPROM, CD-ROM or other optical disk storage, magnetic disk storage or other magnetic storage devices, or any other device which can be used to carry or store desired program code in the form of computer-executable instructions, data structures, or processor chip design. When information or instructions are provided via a network or another communications connection (either hardwired, wireless, or combination thereof) to a computer, the computer properly views the connection as a computer-readable medium. Thus, any such connection is properly termed a computer-readable medium. Combinations of the above should also be included within the scope of the computer-readable storage devices.

Computer-executable instructions include, for example, instructions and data which cause a general-purpose computer, special-purpose computer, or special-purpose processing device to perform a certain function or group of functions. By way of example, computer-executable instructions can be used to implement perception system functionality for determining when sensor cleaning operations are needed or should begin. Computer-executable instructions can also include program modules that are executed by computers in stand-alone or network environments. Generally, program modules include routines, programs, components, data structures, objects, and the functions inherent in the design of special-purpose processors, etc. that perform tasks or implement abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Other examples of the disclosure may be practiced in network computing environments with many types of computer system configurations, including personal computers, hand-held devices, multi-processor systems, microprocessor-based or programmable consumer electronics, network PCs, minicomputers, mainframe computers, and the like. Aspects of the disclosure may also be practiced in distributed computing environments where tasks are performed by local and remote processing devices that are linked (either by hardwired links, wireless links, or by a combination thereof) through a communications network. In a distributed computing environment, program modules can be located in both local and remote memory storage devices.

The various examples described above are provided by way of illustration only and should not be construed to limit the scope of the disclosure. For example, the principles herein apply equally to optimization as well as general improvements. Various modifications and changes may be made to the principles described herein without following the example aspects and applications illustrated and described herein, and without departing from the spirit and scope of the disclosure.

Claim language or other language in the disclosure reciting "at least one of" a set and/or "one or more" of a set indicates that one member of the set or multiple members of the set (in any combination) satisfy the claim. For example, claim language reciting "at least one of A and B" or "at least one of A or B" means A, B, or A and B. In another example, claim language reciting "at least one of A, B, and C" or "at least one of A, B, or C" means A, B, C, or A and B, or A and C, or B and C, or A and B and C. The language "at least one of" a set and/or "one or more" of a set does not limit the set to the items listed in the set. For example, claim language reciting "at least one of A and B" or "at least one of A or B" can mean A, B, or A and B, and can additionally include items not listed in the set of A and B.

Illustrative examples of the disclosure include:
Aspect 1. A system comprising: memory; and one or more processors coupled to the memory, the one or more processors being configured to: obtain, from an optical sensor configured to rotate about an axis of the optical sensor, raw sensor data collected by the optical sensor in a scene; generate, based on the raw sensor data, one or more slices of sensor data, each slice of the one or more slices having a respective field-of-coverage (FOC) that is less than 360 degrees of coverage, wherein a size of each slice is determined based on at least one of a desired rate for publishing a combination of slices of sensor data that yields a 360 degrees of coverage within a threshold amount of time, a number and size of slices estimated to yield a combined FOC of 360 degrees while achieving a desired reduction in a compute resources contention by downstream consumer nodes, and a field-of-view (FOV) of one or more camera devices; and provide, to one or more downstream compute nodes, a partial optical sensor scan comprising the one or more slices of sensor data, the partial optical sensor scan being provided to the one or more downstream compute nodes prior to obtaining, from the optical sensor, a full revolution of sensor data having an additional FOC comprising 360 degrees of coverage.
Aspect 2. The system of Aspect 1, wherein the one or more processors are configured to: obtain, from a camera sensor having a respective FOV that at least partly overlaps with a FOC of the partial optical sensor scan, an image depicting a scene within the respective FOV of the camera sensor; and fuse the image with the partial optical sensor scan.
Aspect 3. The system of Aspect 1 or Aspect 2, wherein the one or more processors are configured to: determine that one or more targets depicted in the image correspond to one or more targets represented in the partial optical sensor scan; and based on the partial optical sensor scan, add a bounding box around the one or more targets depicted in the image.
Aspect 4. The system of Aspect 3, wherein the one or more processors are configured to: align the partial optical sensor scan with the image; and fuse the partial optical sensor scan with the image further based on the aligning of the partial optical sensor scan with the image.
Aspect 5. The system of Aspect 2, wherein at least one of the FOC of the partial optical sensor scan and the size of the partial optical sensor scan is determined based on the respective FOV of the camera sensor.
Aspect 6. The system of any of Aspects 1 to 5, wherein the optical sensor comprises a light detection and ranging sensor.
Aspect 7. The system of any of Aspects 1 to 6, wherein obtaining the raw sensor data comprises obtaining an optical signal from the optical sensor, wherein the optical signal comprises the raw sensor data, and wherein the one or more processors are configured to: split the optical signal into a primary return and a secondary return; and provide at least one of the primary return and the secondary return to the one or more downstream consumer nodes.
Aspect 8. The system of any of Aspects 1 to 7, wherein the one or more processors are configured to: translate a frame of reference of at least one of the raw sensor data and the one or more slices of sensor data from a first frame of reference of the optical sensor to a second frame of reference of a vehicle implementing the optical sensor or a camera sensor of the vehicle.
Aspect 9. The system of any of Aspects 1 to 8, wherein the one or more processors are configured to: obtain, from an additional optical sensor configured to rotate about an axis of the additional optical sensor, additional raw sensor data collected by the additional optical sensor; select an optical sensor data accumulator to process the additional raw sensor data, the optical sensor data accumulator being selected from a plurality of optical sensor data accumulators based on a FOV of a camera sensor in a vehicle associated with the additional optical sensor; and generate, based on the additional raw sensor data, one or more additional slices of sensor data, each slice of the one or more additional slices having a FOC that is less than 360 degrees of coverage.
Aspect 10. The system of Aspect 9, wherein the one or more additional slices of sensor data are generated as the additional raw sensor data is received without waiting to receive an amount of raw sensor data that has a combined FOC of 360 degrees, and wherein the one or more processors are configured to: provide, to at least one downstream compute node, a second partial optical sensor scan comprising the one or more additional slices of sensor data.
Aspect 11. A method comprising: obtaining, from an optical sensor configured to rotate about an axis of the optical sensor, raw sensor data collected by the optical sensor in a scene; generating, based on the raw sensor data, one or more slices of sensor data, each slice of the one or more slices having a respective field-of-coverage (FOC) that is less than 360 degrees of coverage, wherein a size of each slice is determined based on at least one of a desired rate for publishing a combination of slices of sensor data that yields a 360 degrees of coverage within a threshold amount of time slice, a number and size of slices estimated to yield a combined FOC of 360 degrees while achieving a desired reduction in a compute resources contention by downstream consumer nodes, and a field-of-view (FOV) of one or more camera devices; and providing, to one or more downstream compute nodes, a partial optical sensor scan comprising the one or more slices of sensor data, the partial optical sensor scan being provided to the one or more downstream compute nodes prior to obtaining, from the optical sensor, a full revolution of sensor data having an additional FOC comprising 360 degrees of coverage.
Aspect 12. The method of Aspect 11, further comprising: obtaining, from a camera sensor having a respective FOV that at least partly overlaps with a FOC of the partial optical sensor scan, an image depicting a scene within the respective FOV of the camera sensor; and fusing the image with the partial optical sensor scan.
Aspect 13. The system of Aspect 11 or Aspect 12, further comprising: determining that one or more targets depicted in the image correspond to one or more targets represented in the partial optical sensor scan; and based on the partial optical sensor scan, adding a bounding box around the one or more targets depicted in the image.
Aspect 14. The system of Aspect 13, further comprising: aligning the partial optical sensor scan with the image; and fusing the partial optical sensor scan with the image further based on the aligning of the partial optical sensor scan with the image.
Aspect 15. The system of Aspect 12, wherein at least one of the FOC of the partial optical sensor scan and the size of the partial optical sensor scan is determined based on the respective FOV of the camera sensor.
Aspect 16. The method of any of Aspects 11 to 15, wherein the optical sensor comprises a light detection and ranging sensor.
Aspect 17. The method of any of Aspects 11 to 16, wherein obtaining the raw sensor data comprises obtaining an optical signal from the optical sensor, wherein the optical signal comprises the raw sensor data, the method further comprising: splitting the optical signal into a primary return and a secondary return; and providing at least one of the primary return and the secondary return to the one or more downstream consumer nodes.
Aspect 18. The method of any of Aspects 11 to 17, further comprising: translating a frame of reference of at least one of the raw sensor data and the one or more slices of sensor data from a first frame of reference of the optical sensor to a second frame of reference of a vehicle implementing the optical sensor or a camera sensor of the vehicle.
Aspect 19. The method of any of Aspects 11 to 18, further comprising: obtaining, from an additional optical sensor configured to rotate about an axis of the additional optical sensor, additional raw sensor data collected by the additional optical sensor; selecting an optical sensor data accumulator to process the additional raw sensor data, the optical sensor data accumulator being selected from a plurality of optical sensor data accumulators based on a FOV of a camera sensor in a vehicle associated with the additional optical sensor; and generating, based on the additional raw sensor data, one or more additional slices of sensor data, each slice of the one or more additional slices having a FOC that is less than 360 degrees of coverage.
Aspect 20. The method of Aspect 19, wherein the one or more additional slices of sensor data are generated as the additional raw sensor data is received without waiting to receive an amount of raw sensor data that has a combined FOC of 360 degrees.
Aspect 21. The method of Aspect 20, further comprising: providing, to at least one downstream compute node, a second partial optical sensor scan comprising the one or more additional slices of sensor data.
Aspect 22. A non-transitory computer-readable medium having stored thereon instructions which, when executed by one or more processors, cause the one or more processors to perform a method according to any of Aspects 11 to 21.
Aspect 23. A system comprising means for performing a method according to any of Aspects 11 to 21.
Aspect 24. The system of Aspect 23, wherein the system comprises an autonomous vehicle.
Aspect 25. A computer program product comprising instructions which, when executed by one or more processors, cause the one or more processors to perform a method according to any of Aspects 11 to 21.
Aspect 26. An autonomous vehicle comprising a computer device configured to perform a method according to any of Aspects 11 to 21.

## Claims

1. A system comprising means for:
obtaining, from an optical sensor configured to rotate about an axis of the optical sensor, raw sensor data collected by the optical sensor in a scene;
generating, based on the raw sensor data, one or more slices of sensor data, each slice of the one or more slices having a respective field-of-coverage (FOC) that is less than 360 degrees of coverage, wherein a size of each slice is determined based on at least one of a desired rate for publishing a combination of slices of sensor data that yields a 360 degrees of coverage within a threshold amount of time, a number and size of slices estimated to yield a combined FOC of 360 degrees while achieving a desired reduction in a compute resources contention by downstream consumer nodes, and a field-of-view (FOV) of one or more camera devices; and
providing, to one or more downstream compute nodes, a partial optical sensor scan comprising the one or more slices of sensor data, the partial optical sensor scan being provided to the one or more downstream compute nodes prior to obtaining, from the optical sensor, a full revolution of sensor data having an additional FOC comprising 360 degrees of coverage.

2. The system of claim 1, further comprising means for:
obtaining, from a camera sensor having a respective FOV that at least partly overlaps with a FOC of the partial optical sensor scan, an image depicting a scene within the respective FOV of the camera sensor; and
fusing the image with the partial optical sensor scan.

3. The system of claim 2, further comprising means for:
determining that one or more targets depicted in the image correspond to one or more targets represented in the partial optical sensor scan; and
based on the partial optical sensor scan, adding a bounding box around the one or more targets depicted in the image.

4. The system of claim 3, further comprising means for:
aligning the partial optical sensor scan with the image; and
fusing the partial optical sensor scan with the image further based on the aligning of the partial optical sensor scan with the image.

5. The system of claim 2, wherein at least one of the FOC of the partial optical sensor scan and the size of the partial optical sensor scan is determined based on the respective FOV of the camera sensor.

6. The system of claim 1, wherein the optical sensor comprises a light detection and ranging sensor.

7. The system of claim 1, wherein obtaining the raw sensor data comprises obtaining an optical signal from the optical sensor, and wherein the optical signal comprises the raw sensor data, the system further comprising means for:
splitting the optical signal into a primary return and a secondary return; and
providing at least one of the primary return and the secondary return to the one or more downstream consumer nodes.

8. The system of claim 1, further comprising means for:
obtaining, from an additional optical sensor configured to rotate about an axis of the additional optical sensor, additional raw sensor data collected by the additional optical sensor;
selecting an optical sensor data accumulator to process the additional raw sensor data, the optical sensor data accumulator being selected from a plurality of optical sensor data accumulators based on a FOV of a camera sensor in a vehicle associated with the additional optical sensor; and
generating, based on the additional raw sensor data, one or more additional slices of sensor data, each slice of the one or more additional slices having a FOC that is less than 360 degrees of coverage.

9. The system of claim 8, wherein the one or more additional slices of sensor data are generated as the additional raw sensor data is received without waiting to receive an amount of raw sensor data that has a combined FOC of 360 degrees, the system further comprising means for:
providing, to at least one downstream compute node, a second partial optical sensor scan comprising the one or more additional slices of sensor data.

10. A computer-implemented method comprising:
obtaining, from an optical sensor configured to rotate about an axis of the optical sensor, raw sensor data collected by the optical sensor in a scene;
generating, based on the raw sensor data, one or more slices of sensor data, each slice of the one or more slices having a respective field-of-coverage (FOC) that is less than 360 degrees of coverage, wherein a size of each slice is determined based on at least one of a desired rate for publishing a combination of slices of sensor data that yields a 360 degrees of coverage within a threshold amount of time slice, a number and size of slices estimated to yield a combined FOC of 360 degrees while achieving a desired reduction in a compute resources contention by downstream consumer nodes, and a field-of-view (FOV) of one or more camera devices; and
providing, to one or more downstream compute nodes, a partial optical sensor scan comprising the one or more slices of sensor data, the partial optical sensor scan being provided to the one or more downstream compute nodes prior to obtaining, from the optical sensor, a full revolution of sensor data having an additional FOC comprising 360 degrees of coverage.

11. The computer-implemented method of claim 10, further comprising:
obtaining, from a camera sensor having a respective FOV that at least partly overlaps with a FOC of the partial optical sensor scan, an image depicting a scene within the respective FOV of the camera sensor; and
fusing the image with the partial optical sensor scan.

12. The computer-implemented method of claim 11, further comprising:
aligning the partial optical sensor scan with the image; and
fusing the partial optical sensor scan with the image further based on the aligning of the partial optical sensor scan with the image, wherein at least one of the FOC of the partial optical sensor scan and the size of the partial optical sensor scan is determined based on the respective FOV of the camera sensor, and wherein the optical sensor comprises a light detection and ranging sensor.

13. The computer-implemented method of claim 10, wherein obtaining the raw sensor data comprises obtaining an optical signal from the optical sensor, wherein the optical signal comprises the raw sensor data, the method further comprising:
splitting the optical signal into a primary return and a secondary return; and
providing at least one of the primary return and the secondary return to the one or more downstream consumer nodes.

14. The computer-implemented method of claim 10, further comprising:
obtaining, from an additional optical sensor configured to rotate about an axis of the additional optical sensor, additional raw sensor data collected by the additional optical sensor;
selecting an optical sensor data accumulator to process the additional raw sensor data, the optical sensor data accumulator being selected from a plurality of optical sensor data accumulators based on a FOV of a camera sensor in a vehicle associated with the additional optical sensor; and
generating, based on the additional raw sensor data, one or more additional slices of sensor data, each slice of the one or more additional slices having a FOC that is less than 360 degrees of coverage.

15. A non-transitory computer-readable medium comprising instructions which, when executed by one or more processors, cause the one or more processors to:
obtain, from an optical sensor configured to rotate about an axis of the optical sensor, raw sensor data collected by the optical sensor in a scene;
generate, based on the raw sensor data, one or more slices of sensor data, each slice of the one or more slices having a respective field-of-coverage (FOC) that is less than 360 degrees of coverage, wherein a size of each slice is determined based on at least one of a desired rate for publishing a combination of slices of sensor data that yields a 360 degrees of coverage within a threshold amount of time, a number and size of slices estimated to yield a combined FOC of 360 degrees while achieving a desired reduction in a compute resources contention by downstream consumer nodes, and a field-of-view (FOV) of one or more camera devices; and
provide, to one or more downstream compute nodes, a partial optical sensor scan comprising the one or more slices of sensor data, the partial optical sensor scan being provided to the one or more downstream compute nodes prior to obtaining, from the optical sensor, a full revolution of sensor data having an additional FOC comprising 360 degrees of coverage.
